# EUROPEAN PATENT APPLICATION

(11) **EP 4 386 929 A1**
(43) Date of publication of application: **19.06.2024**
(21) Application number: 22918352.0
(22) Date of filing: 09.12.2022
(51) Int. Cl.: H01M 10/0587

(54) **WINDING TYPE ELECTRODE ASSEMBLY, BATTERY CELL, BATTERY AND ELECTRIC DEVICE**

(30) Priority: 05.01.2022 CN 202210010096
(71) Applicant: Contemporary Amperex Technology Co., Limited, Ningde City, Fujian 352100 (CN)
(72) Inventor: LUO, Wei, Ningde City, Fujian 352100 (CN); YANG, Longfei, Ningde City, Fujian 352100 (CN); YANG, Limei, Ningde City, Fujian 352100 (CN); YE, Simin, Ningde City, Fujian 352100 (CN)
(74) Representative: von Tietzen und Hennig, Nikolaus
(86) International application number: PCT/CN2022/138049
(87) International publication number: WO 2023/130902

(57) **Abstract**

This application provides a jelly-roll electrode assembly, a battery cell, a battery, an electrical device, and a method and equipment for manufacturing the jelly-roll electrode assembly, and relates to the field of battery technology. The jelly-roll electrode assembly includes a positive electrode plate. The positive electrode plate includes a positive current collector and a first positive active material layer disposed on an inner surface of the positive current collector. The positive electrode plate includes a plurality of layers of bend portion located in the bend region and arranged sequentially from inside to outside. The first positive active material layer includes a plurality of first positive active material portions located in the plurality of layers of bend portion. A plurality of first grooves are created in at least one of the first positive active material portions to reduce the capacity of the positive active material in the bend region and increase a cell balance value of the bend region. Such arrangement can also reserve an expansion space, reduce the stress on the electrode plate in the bend region, enable more electrolyte solution to be accommodated in the electrode assembly, reduce the risk of lithium plating that occurs because the electrolyte solution is insufficient for infiltration and affects transfer of ions, alleviate concentration polarization, and reduce the risk of lithium plating in the bend region.

## Description

### CROSS-REFERENCE TO RELATED APPLICATIONS

This application claims priority to Chinese Patent Application No. 202210010096.4, filed on January 5, 2022 and entitled "JELLY-ROLL ELECTRODE ASSEMBLY, BATTERY CELL, BATTERY, AND ELECTRICAL DEVICE", which is incorporated herein by reference in its entirety.

### TECHNICAL FIELD

This application relates to the field of battery technology, and in particular, to a jelly-roll electrode assembly, a battery cell, a battery, an electrical device, and a method and equipment for manufacturing the jelly-roll electrode assembly.

### BACKGROUND

Currently, with the rapid development of smartphones, tablet computers, electric vehicles, and the like, lithium-ion batteries are used more widely, and accordingly, higher requirements are imposed on lithium-ion batteries.

People expect higher electrical performance of a lithium battery in addition to safety performance of the battery. Lithium plating is one of main factors affecting the electrical performance and safety performance of the battery. Once lithium plating occurs in a battery cell, not only the electrical performance of the battery will deteriorate, but also dendrites are prone to take shape with the accumulation of lithium precipitated. The dendrites are prone to puncture the separator, cause an internal short circuit in the battery, and result in a safety hazard.

### SUMMARY

Some embodiments of this application provide a jelly-roll electrode assembly, a battery cell, a battery, an electrical device, and a method and equipment for manufacturing a jelly-roll electrode assembly to reduce the lithium plating risk of the electrode assembly.

According to a first aspect, an embodiment of this application provides a jelly-roll electrode assembly. The jelly-roll electrode assembly contains a bend region, and includes a positive electrode plate. The positive electrode plate includes a positive current collector and a first positive active material layer disposed on an inner surface of the positive current collector. The inner surface is oriented toward a winding axis of the jelly-roll electrode assembly after completion of winding. The positive electrode plate includes a plurality of layers of bend portion located in the bend region and arranged sequentially from inside to outside. The first positive active material layer includes a plurality of first positive active material portions located in the plurality of layers of bend portion. A plurality of first grooves are created in at least one of the first positive active material portions.

In the above technical solution, a plurality of first grooves are created on at least one layer of the first positive active material layer on the inner surface of the positive current collector in the bend region, thereby reducing the capacity of the positive active material in the bend region, and in turn, increasing a cell balance (CB) value of the bend region. The CB value is a ratio of the capacity of the negative active material to the capacity of the positive active material. Such arrangement can also reserve an expansion space for the jelly-roll electrode assembly, reduce the stress on the electrode plate (positive electrode plate and/or negative electrode plate) in the bend region, and reduce the resistance in intercalating ions into the negative electrode plate. The plurality of first grooves enable more electrolyte solution to be accommodated in the jelly-roll electrode assembly, and to serve as a supplementary electrolyte solution when the internal electrolyte solution is depleted due to expansion and squeezing of the jelly-roll electrode assembly. Such arrangement reduces the risk of lithium plating that occurs because the electrolyte infiltration is insufficient and affects transfer of ions, alleviates concentration polarization, improves the cycle performance in the battery cell, reduces the risk of lithium plating in the bend region, and in turn, improves the safety performance of the battery cell containing the jelly-roll electrode assembly.

In some embodiments in the first aspect of this application, the plurality of first grooves are spaced apart along an extension direction of the positive electrode plate.

In the above technical solution, the plurality of first grooves are spaced apart along the extension direction of the positive electrode plate to reduce the risk of lithium plating at any position of the bend region along the extension direction of the positive electrode plate.

In some embodiments in the first aspect of this application, the plurality of first grooves are disposed on an inner surface of the first positive active material portion, the inner surface being away from the positive current collector.

In the above technical solution, the plurality of first grooves are disposed on the inner surface of the first positive active material portion away from the positive current collector, thereby reducing the capacity of the positive active material in the bend region, and in turn, increasing the CB value of the bend region, reducing the lithium plating risk of the jelly-roll electrode assembly, and improving the safety performance of the battery cell containing the jelly-roll electrode assembly. The first grooves created on the inner surface of the first positive active material portion can also reserve an expansion space for the jelly-roll electrode assembly, reduce the stress on the electrode plate (positive electrode plate and/or negative electrode plate) in the bend region, and reduce the resistance in intercalating ions into the negative electrode plate. Disposing the first grooves on the inner surface of the first positive active material portion away from the positive current collector can also increase the space between the first positive active material portion and the negative electrode plate on the inner side of the first positive active material portion, enable more electrolyte solution to be accommodated, further reduce the risk of lithium plating that occurs because the electrolyte solution is extruded out of the jelly-roll electrode assembly and affects transfer of ions, improve the cycle performance in the battery cell, reduce the risk of lithium plating in the bend region, and in turn, improve the safety performance of the battery cell containing the jelly-roll electrode assembly.

In some embodiments in the first aspect of this application, the first grooves run through the first positive active material portion until both ends in an extension direction of the winding axis.

In the above technical solution, along the extension direction of the winding axis, the first grooves run through the first positive active material portion until both ends to provide a channel for the electrolyte solution to infiltrate the jelly-roll electrode assembly, thereby facilitating the flow of the electrolyte solution inside the jelly-roll electrode assembly, reducing the risk of insufficient infiltration in the bend region of the jelly-roll electrode assembly caused by a high stress, reducing the concentration polarization, and alleviating lithium plating in the bend region.

In some embodiments in the first aspect of this application, an extension direction of the first grooves is parallel to the extension direction of the winding axis.

In the above technical solution, the extension direction of the first grooves is parallel to the extension direction of the winding axis, thereby making it convenient to form the first grooves in the first positive active material portion, and reducing the production difficulty.

In some embodiments in the first aspect of this application, a plurality of first grooves are created in at least two of the first positive active material portions in the bend region. Among the two first positive active material portions, a distribution density of the first grooves in the first positive active material portion located inside is greater than a distribution density of the first grooves in the first positive active material portion located outside.

In the above technical solution, in the jelly-roll electrode assembly, the part closer to the electrode assembly is more prone to precipitate lithium. When the electrode assembly expands, the coil or layer closer to the winding axis of the jelly-roll electrode assembly is squeezed more intensely. Therefore, the distribution density of the first grooves in the first positive active material portion located inside is greater than the distribution density of the first grooves in the first positive active material portion located outside. In this way, a larger space is provided between the first positive active material portion located inside and the negative electrode plate located inside, and a larger expansion space can be reserved for the jelly-roll electrode assembly, thereby reducing the stress on the electrode plate (positive electrode plate and/or negative electrode plate) in the bend region, and reducing the resistance in intercalating ions into the negative electrode plate. Such arrangement enables more electrolyte solution to be accommodated, reduces the risk of lithium plating that occurs because the electrolyte solution close to the winding axis is extruded and affects transfer of ions, and improves the cycle performance in the battery cell.

In some embodiments in the first aspect of this application, a plurality of first grooves are created in at least two of the first positive active material portions in the bend region. Among the two first positive active material portions, a width of the first grooves in the first positive active material portion located inside is greater than a width of the first grooves in the first positive active material portion located outside.

In the above technical solution, in the jelly-roll electrode assembly, the part closer to the electrode assembly is more prone to precipitate lithium. When the electrode assembly expands, the coil or layer closer to the winding axis of the jelly-roll electrode assembly is squeezed more intensely. Therefore, the width of the first grooves in the first positive active material portion located inside is greater than the width of the first grooves in the first positive active material portion located outside. In this way, a larger space is provided between the first positive active material portion located inside and the negative electrode plate located inside, and a larger expansion space can be reserved for the jelly-roll electrode assembly, thereby reducing the stress on the electrode plate (positive electrode plate and/or negative electrode plate) in the bend region, and reducing the resistance in intercalating ions into the negative electrode plate. Such arrangement enables more electrolyte solution to be accommodated, reduces the risk of lithium plating that occurs because the electrolyte solution close to the winding axis is extruded and affects transfer of ions, and improves the cycle performance in the battery cell.

In some embodiments in the first aspect of this application, a plurality of first grooves are created in at least one innermost first positive active material portion in the bend region.

In the above technical solution, in the jelly-roll electrode assembly, the innermost layer of positive electrode plate is squeezed first and is more intensely squeezed. A plurality of first grooves are created in the innermost first positive active material portion. In this way, more electrolyte solution can be accommodated between the innermost first positive active material portion and the negative electrode plate located inside. Such electrolyte solution can serve as a supplementary electrolyte solution when the internal electrolyte solution is depleted due to expansion and squeezing of the innermost first positive active material portion. Such arrangement reduces the risk of lithium plating that occurs because the internal electrolyte solution of the jelly-roll electrode assembly is extruded and affects transfer of ions, and improves the cycle performance in the battery cell.

In some embodiments in the first aspect of this application, the positive electrode plate includes a winding termination section. A plurality of first grooves are created in at least a part of the first positive active material portions in the winding termination section in the bend region.

In the above technical solution, when the jelly-roll electrode assembly expands until abutting against the shell of the battery cell, the electrode plate closer to the inner wall of the shell is subjected to a larger extrusion force. A plurality of first grooves are created in at least a part of the first positive active material portions in the winding termination section, thereby reserving an expansion space in a region close to the inner wall of the shell in the jelly-roll electrode assembly, reducing the stress on the electrode plate (positive electrode plate and/or negative electrode plate) close to the inner wall of the shell in the bend region, and reducing the resistance in intercalating ions into the negative electrode plate. The plurality of first grooves also enable more electrolyte solution to be accommodated in the jelly-roll electrode assembly, and to serve as a supplementary electrolyte solution in a case that the internal electrolyte solution is extruded when the jelly-roll electrode assembly expands until abutting against the inner wall of the shell. Such arrangement reduces the risk of lithium plating that occurs because the internal electrolyte solution is extruded out of the jelly-roll electrode assembly and affects transfer of ions, improves the cycle performance in the battery cell, reduces the risk of lithium plating in the bend region, and in turn, improves the safety performance of the battery cell containing the jelly-roll electrode assembly.

In some embodiments in the first aspect of this application, the plurality of first grooves are arranged in a lattice pattern.

In the above technical solution, the plurality of first grooves are arranged in a lattice pattern, thereby guiding the electrolyte solution to flow in different directions, facilitating circulation of the electrolyte solution inside the jelly-roll electrode assembly, alleviating the insufficiency of infiltration at the bend region of the jelly-roll electrode assembly caused by a high stress, reducing the concentration polarization, and alleviating the lithium plating at the corners.

In some embodiments in the first aspect of this application, the positive electrode plate further includes a second positive active material layer disposed on an outer surface of the positive current collector. The second positive active material layer includes a plurality of second positive active material portions located in the plurality of layers of bend portion. A plurality of second grooves are created in at least one of the second positive active material portions.

In the above technical solution, a plurality of second grooves are created on at least one layer of the second positive active material layer on the outer surface of the positive current collector in the bend region, thereby reserving an expansion space for the jelly-roll electrode assembly, reducing the stress on the electrode plate (positive electrode plate and/or negative electrode plate) in the bend region, and reducing the resistance in intercalating ions into the negative electrode plate. The plurality of second grooves enable more electrolyte solution to be accommodated in the jelly-roll electrode assembly, and to serve as a supplementary electrolyte solution when the internal electrolyte solution is depleted due to expansion and squeezing of the jelly-roll electrode assembly. Such arrangement reduces the risk of lithium plating that occurs because the internal electrolyte solution of the jelly-roll electrode assembly is extruded and affects transfer of ions, improves the cycle performance in the battery cell, reduces the risk of lithium plating in the bend region, and in turn, improves the safety performance of the battery cell containing the jelly-roll electrode assembly.

In some embodiments in the first aspect of this application, the jelly-roll electrode assembly includes a straight region and two bend regions. The two bend regions are connected to two ends of the straight region respectively. A weight W₀ of the positive active material layer per unit area of the positive electrode plate located in the straight region and a weight Wₙ of the positive active material per unit area of the positive electrode plate located in the bend regions satisfy: 30%W₀ ≤ Wₙ ≤ 95%W₀.

In the above technical solution, the weight W₀ of the positive active material layer per unit area of the positive electrode plate located in the straight region and the weight Wₙ of the positive active material per unit area of the positive electrode plate located in the bend regions satisfy 30%W₀ ≤ Wₙ ≤ 95%W₀, thereby not only reducing the risk of lithium plating in the bend region of the jelly-roll electrode assembly, but also ensuring a high energy density of the jelly-roll electrode assembly.

In some embodiments in the first aspect of this application, the jelly-roll electrode assembly further includes a negative electrode plate and a separator. A thickness of the positive electrode plate is M₁. A thickness of the negative electrode plate is M₂. Athickness of the separator is M₃. A distance between an initial first groove and a last first groove in an n^{th} layer of bend portion from inside to outside along a winding direction of the jelly-roll electrode assembly is Cₙ, satisfying: 0.1 mm ≤ Cₙ ≤ pi × (M₁ + M₂ + M₃) × a + 50 mm, where n is a natural number greater than or equal to 2, a denotes an a^{th} layer of positive electrode plate from inside to outside, and pi is a circumference ratio.

In the above technical solution, the thickness of the positive electrode plate is M₁, the thickness of the negative electrode plate is M₂, and the thickness of the separator is M₃. The distance between the initial first groove and the last first groove in the n^{th} layer of bend portion from inside to outside along the winding direction of the jelly-roll electrode assembly is Cₙ, satisfying: 0.1 mm ≤ Cₙ ≤ pi × (M₁ + M₂ + 2M₃) × a + 50 mm. In this way, on the layer of bend portion farther away from the winding axis, the span of the plurality of first grooves along the winding direction is larger, so that the span of the plurality of first grooves on each layer of bend portion matches the length of the corresponding bend portion, thereby effectively alleviating the problem of lithium plating caused by attenuation of active lithium at the bend portion.

According to a second aspect, an embodiment of this application provides a battery cell. The battery cell includes a shell and the jelly-roll electrode assembly disclosed in an embodiment of the first aspect. The shell includes an opening. The jelly-roll electrode assembly is accommodated in the shell.

In the above technical solution, the battery cell includes the jelly-roll electrode assembly disclosed in an embodiment of the first aspect, thereby improving the cycle performance of the battery cell, reducing the risk of lithium plating of the battery cell, and in turn, improving the safety performance of the battery cell.

According to a third aspect, an embodiment of this application provides a battery, including the battery cell disclosed in an embodiment of the second aspect.

In the above technical solution, the battery includes the battery cell disclosed in an embodiment of the second aspect, thereby improving the cycle performance of the battery, reducing the risk of lithium plating of the battery, and in turn, improving the safety performance of the battery.

According to a fourth aspect, an embodiment of this application provides an electrical device, including the battery cell disclosed in an embodiment of the second aspect.

According to a fifth aspect, an embodiment of this application provides a method for manufacturing a jelly-roll electrode assembly. The method includes:
providing a positive electrode plate, where the positive electrode plate includes a positive current collector and a first positive active material layer disposed on one side of the positive current collector, and a plurality of first grooves are created on the first positive active material layer; and
winding the positive electrode plate to form a jelly-roll electrode assembly.

In the method described above, the first positive active material layer is located on an inner surface of the positive current collector, the inner surface is oriented toward a winding axis of the jelly-roll electrode assembly after completion of winding, the jelly-roll electrode assembly includes a bend region, the positive electrode plate includes a plurality of layers of bend portion located in the bend region and arranged sequentially from inside to outside, and at least a part of the plurality of first grooves are located in at least one layer of bend portion.

According to a sixth aspect, an embodiment of this application provides a piece of equipment for manufacturing a jelly-roll electrode assembly. The equipment includes a providing apparatus and an assembling apparatus. The providing apparatus is configured to provide a positive electrode plate. The positive electrode plate includes a positive current collector and a first positive active material layer disposed on one side of the positive current collector. A plurality of first grooves are created on the first positive active material layer. The assembling apparatus is configured to wind the positive electrode plate to form a jelly-roll electrode assembly. The first positive active material layer is located on an inner surface of the positive current collector. The inner surface is oriented toward a winding axis of the jelly-roll electrode assembly after completion of winding. The jelly-roll electrode assembly includes a bend region. The positive electrode plate includes a plurality of layers of bend portion located in the bend region and arranged sequentially from inside to outside. At least a part of the plurality of first grooves are located in at least one layer of bend portion.

### BRIEF DESCRIPTION OF DRAWINGS

To describe technical solutions in embodiments of this application more clearly, the following outlines the drawings to be used in the embodiments. Understandably, the following drawings show merely some embodiments of this application, and therefore, are not intended to limit the scope. A person of ordinary skill in the art may derive other related drawings from the drawings without making any creative efforts.
FIG. 1 is a schematic structural diagram of a vehicle according to some embodiments of this application;
FIG. 2 is a schematic structural diagram of a battery according to some embodiments of this application;
FIG. 3 is a schematic structural diagram of a battery cell according to some embodiments of this application;
FIG. 4 is an exploded view of a battery cell according to some embodiments of this application;
FIG. 5 is a schematic structural diagram of an electrode assembly according to some embodiments of this application;
FIG. 6 is a schematic structural diagram of an electrode assembly according to some other embodiments of this application;
FIG. 7 is a close-up view of an electrode assembly according to some embodiments of this application;
FIG. 8 is a close-up view of an electrode assembly according to some other embodiments of this application;
FIG. 9 is a close-up view of an electrode assembly according to still some other embodiments of this application;
FIG. 10 is a close-up view of an electrode assembly according to yet some other embodiments of this application;
FIG. 11 is a schematic partial view of an electrode assembly according to some other embodiments of this application;
FIG. 12 is a schematic partial view of an electrode assembly according to still some other embodiments of this application;
FIG. 13 is a schematic diagram of a positive electrode plate in an unwound state in which a plurality of first grooves are arranged in a latticed pattern according to some embodiments of this application;
FIG. 14 is a schematic partial view of a jelly-roll electrode assembly according to still some other embodiments of this application;
FIG. 15 is a schematic diagram of a positive electrode plate in an unwound state according to some other embodiments of this application;
FIG. 16 is a flowchart of a method for manufacturing a jelly-roll electrode assembly according to some embodiments of this application; and
FIG. 17 is a schematic structural diagram of equipment for manufacturing a jelly-roll electrode assembly according to some embodiments of this application.

List of reference numerals: 1000-vehicle; 100-battery; 10-box; 11-accommodation space; 12-first part; 13-second part; 20-battery cell; 21-shell; 211-opening; 22-end cap assembly; 221-end cap; 222-electrode terminal; 23-electrode assembly; 231-positive electrode plate; 2311-positive current collector; 2312-first positive active material layer; 2312a-first positive active material portion; 2313-bend portion; 2314-first groove; 2315-second positive active material layer; 2315a-second positive active material portion; 2316-second groove; 232-negative electrode plate; 233-bend region; 234-straight region; 24-current collection component; 25-insulation protector; 200- controller; 300-motor; 2000-equipment for manufacturing a jelly-roll electrode assembly; 2100-providing apparatus; 2200-assembling apparatus.

### DETAILED DESCRIPTION OF EMBODIMENTS

To make the objectives, technical solutions, and advantages of the embodiments of this application clearer, the following gives a clear and complete description of the technical solutions in the embodiments of this application with reference to the drawings in the embodiments of this application. Apparently, the described embodiments are merely a part of but not all of the embodiments of this application. The components described and illustrated in the drawings according to the embodiments of this application generally may be arranged and designed in a variety of different configurations.

Therefore, the following detailed description of the embodiments of this application provided with reference to the drawings is not intended to limit the scope of this application as claimed, but merely represents selected embodiments of this application. All other embodiments derived by a person of ordinary skill in the art based on the embodiments of this application without making any creative efforts still fall within the protection scope of this application.

It is hereby noted that to the extent that no conflict occurs, the embodiments of this application and the features in the embodiments may be combined with each other.

It is hereby noted that similar reference numerals and letters indicate similar items in the following drawings. Therefore, once an item is defined in one drawing, the item does not need to be further defined or construed in subsequent drawings.

In the description of the embodiments of this application, it is hereby noted that an indicated direction or positional relationship is a direction or positional relationship based on illustration in the drawings, or a direction or positional relationship by which a product in use according to this application is usually placed, or a direction or positional relationship commonly understood by a person skilled in the art, and is merely intended for ease or brevity of describing this application, but does not indicate or imply that the indicated apparatus or component is necessarily located in the specified direction or constructed or operated in the specified direction. Therefore, the indicated direction or positional relationship is never to be understood as a limitation on this application. In addition, the terms "first", "second", "third", and so on are merely used for differentiated description, but not to be understood as indicating or implying order of precedence.

In the description of embodiments of this application, unless otherwise expressly specified and defined, the terms "dispose", "mount", and "connect" are understood in a broad sense. For example, a "connection" may be a fixed connection, a detachable connection, or an integrated connection, and may be a direct connection or an indirect connection implemented through an intermediary. A person of ordinary skill in the art can understand the specific meanings of the terms in this application according to the context.

Currently, as can be seen from the market trend, the application of power batteries is increasingly extensive. Power batteries are not only used in energy storage power systems such as hydro, thermal, wind, and solar power stations, but also widely used in electric means of transport such as electric bicycles, electric motorcycles, and electric vehicles, and used in many other fields such as military equipment and aerospace. The market demand for power batteries keeps soaring with the increase of the application fields of the power batteries.

The inventor finds that, with the continuous charging and discharging of a lithium battery, active lithium of the lithium battery is continuously consumed, thereby resulting in a decrease in the CB value, and in turn, resulting in lithium plating. The lithium plating phenomenon is more noticeable in a bend region of a jelly-roll electrode assembly. In addition, when the jelly-roll electrode assembly expands, an electrolyte solution in the bend region is extruded severely, thereby resulting in insufficient electrolyte infiltration in the bend region, intensifying concentration polarization, and aggravating lithium plating in the bend region.

Based on the above considerations, in order to alleviate the problem of lithium plating in the jelly-roll electrode assembly caused by consumption of active lithium and insufficient electrolyte infiltration after occurrence of expansion, the inventor has designed a jelly-roll electrode assembly through in-depth research. A plurality of first grooves are created on at least one layer of a first positive active material layer on an inner surface of a positive current collector in a bend region, thereby reducing the capacity of a positive active material in the bend region, and in turn, increasing a cell balance (CB) value of the bend region. Such arrangement can also reserve an expansion space for the jelly-roll electrode assembly, reduce a stress on an electrode plate (positive electrode plate and/or negative electrode plate) in the bend region, and reduce the resistance in intercalating ions into a negative electrode plate. The plurality of first grooves enable more electrolyte solution to be accommodated in the jelly-roll electrode assembly, and to serve as a supplementary electrolyte solution when the internal electrolyte solution is depleted due to expansion and squeezing of the jelly-roll electrode assembly. Such arrangement reduces the risk of lithium plating that occurs because the electrolyte infiltration is insufficient and affects transfer of ions, alleviates concentration polarization, improves the cycle performance in the battery cell, reduces the risk of lithium plating in the bend region, and in turn, improves the safety performance of the battery cell containing the jelly-roll electrode assembly.

The jelly-roll electrode assembly disclosed in this embodiment of this application is applicable to, but not limited to use in, electrical devices such as a vehicle, watercraft, or aircraft. A power supply system of the electrical devices may be formed by using the battery cell, the battery, and the like disclosed in this application, so as to alleviate lithium plating and improve safety of using electricity.

An embodiment of this application provides an electrical device that uses a battery as a power supply. The electrical device may be a vehicle, a mobile phone, a portable device, a laptop computer, a ship, a spacecraft, an electric toy, an electric tool, or the like. The vehicle may be an oil-fueled vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, such as a game console, an electric car toy, an electric ship toy, an electric airplane toy, and the like. The power tool includes an electrical metal cutting tool, an electrical grinding tool, an electrical assembling tool, and a power tool for use in railways. Examples of the power tool are an electrical drill, an electrical grinder, an electrical wrench, an electrical screwdriver, an electrical hammer, an electrical impact drill, a concrete vibrator, an electrical planer, and the like. The electrical device is not particularly limited in this embodiment of this application.

For ease of description in the following embodiments, a vehicle is used as an example of the electrical device.

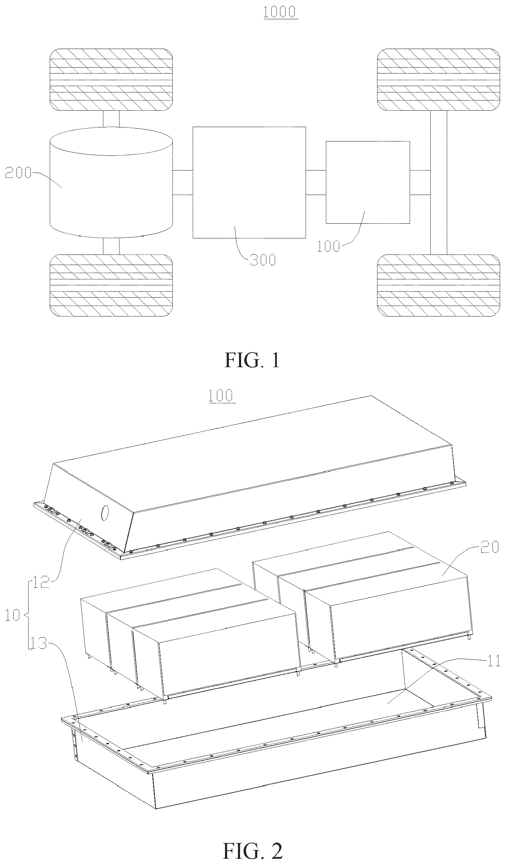

Referring to FIG. 1, FIG. 1 is a schematic structural diagram of a vehicle 1000 according to some embodiments of this application. A battery 100 is disposed inside the vehicle 1000. The battery 100 may be disposed at the bottom, front, or rear of the vehicle 1000. The battery 100 may be configured to supply power to the vehicle 1000. For example, the battery 100 may serve as an operating power supply of the vehicle 1000.

The vehicle 1000 may further include a controller 200 and a motor 300. The controller 200 is configured to control the battery 100 to supply power to the motor 300, for example, to meet electrical energy requirements in starting, navigating, or running the vehicle 1000.

In some embodiments of this application, the battery 100 serves not only as an operating power supply of the vehicle 1000, but may also serve as a drive power supply of the vehicle 1000 to provide a driving power supply for the vehicle 1000 in place of or partly in place of fuel oil or natural gas.

Referring to FIG. 2, FIG. 2 is a schematic structural diagram of a battery 100 according to some embodiments of this application. The battery 100 includes a box 10 and a battery cell 20. The battery cell 20 is accommodated in the box 10.

The box 10 is configured to provide an accommodation space 11 for the battery cell 20. In some embodiments, the box 10 may include a first part 12 and a second part 13. The first part 12 and the second part 13 fit and cover each other to define the accommodation space 11 configured to accommodate the battery cell 20. Definitely, a junction between the first part 12 and the second part 13 may be sealed by a sealing element (not shown in the drawing). The sealing element may be a sealing ring, a sealant, or the like.

The first part 12 and the second part 13 may be in various shapes, such as a cuboid or cylinder. The first part 12 may be a hollow structure opened up at one side to form an accommodation cavity configured to accommodate the battery cell 20. The second part 13 may also be a hollow structure opened up at one side to form an accommodation cavity configured to accommodate the battery cell 20. The open-up side of the second part 13 fits and covers the open-up side of the first part 12 to form a box 10 that includes an accommodation space 11. Alternatively, as shown in FIG. 2, the first part 12 is a hollow structure opened at one side, and the second part 13 is a platelike structure. The second part 13 fits and covers the opening side of the first part 12 to form the box 10 that contains the accommodation space 11.

There may be one or more battery cells 20 in the battery 100. If there are a plurality of battery cells 20, the plurality of battery cells 20 may be connected in series, parallel, or series-and-parallel pattern. The series-and-parallel pattern means a combination of series connection and parallel connection of the plurality of battery cells 20. The plurality of battery cells 20 may be directly connected in series, parallel, or series-and-parallel pattern, and then the whole of the plurality of battery cells 20 may be accommodated in the box 10. Alternatively, the plurality of battery cells 20 may be connected in series, parallel, or series-and-parallel pattern to form a battery module first. A plurality of battery modules are then connected in series, parallel, or series-and-parallel pattern to form a whole for being accommodated in the box 10. The battery cell 20 may be in the shape of a cylinder, flat body, cuboid, or the like. FIG. 2 shows a scenario in which the battery cell 20 is in a prismatic shape.

In some embodiments, the battery 100 may further include a busbar component (not shown in the drawing). The plurality of battery cells 20 may be electrically connected by the busbar component, so as to implement series, parallel, or series-and-parallel connection between the plurality of battery cells 20.

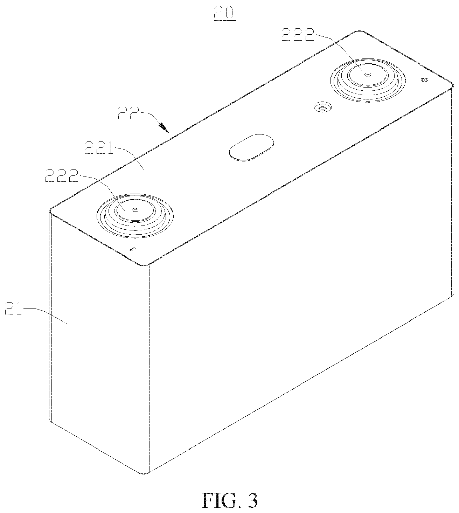

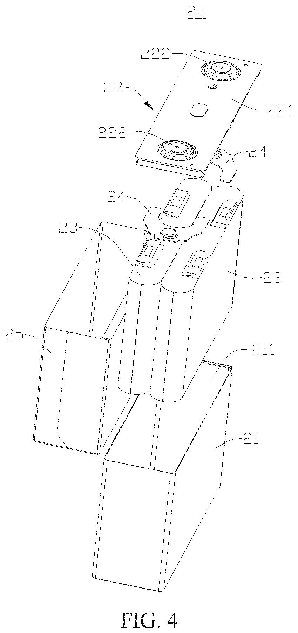

Referring to FIG. 3 and FIG. 4, FIG. 4 is a schematic structural diagram of a battery cell 20 according to some embodiments of this application, and FIG. 4 is an exploded view of a battery cell 20 according to some embodiments of this application. The battery cell 20 may include a shell 21, an end cap assembly 22, and an electrode assembly 23. An opening 211 is created on the shell 21. The electrode assembly 23 is accommodated in the shell 21. The end cap assembly 22 is configured to cover and seal the opening 211.

The shell 21 may be in various shapes such as a cylinder or cuboid. The shape of the shell 21 may be determined depending on the specific shape of the electrode assembly 23. For example, if the electrode assembly 23 is a cylindrical structure, the shell 21 may be a cylindrical structure. If the electrode assembly 23 is a cuboidal structure, the shell 21 may be a cuboidal structure. FIG. 3 and FIG. 4 shows an example in which the shell 21 and the electrode assembly 23 are in a prismatic shape.

The shell 21 may be made of a variety of materials such as copper, iron, aluminum, stainless steel, or aluminum alloy, and the materials are not particularly limited herein.

The end cap assembly 22 includes an end cap 221 and electrode terminals 222. The end cap assembly 22 is configured to cover and seal the opening 211 of the shell 21 to form a hermetically closed mounting space (not shown in the drawing). The mounting space is configured to accommodate the electrode assembly 23. The mounting space is further configured to accommodate an electrolyte such as an electrolytic solution. The end cap assembly 22 is a component configured to output electrical energy of the electrode assembly 23. The electrode terminals 222 in the end cap assembly 22 are configured to be electrically connected to the electrode assembly 23. To be specific, the electrode terminals 222 are electrically connected to tabs of the electrode assembly 23. For example, the electrode terminals 222 are connected to the tabs by a current collection component 24 to implement electrical connection between the electrode terminals 222 and the tabs.

It is hereby noted that the number of openings 211 of the shell 21 may be one or two. If the number of openings 211 of the shell 21 is one, the number of end cap assemblies 22 may also be one, and two electrode terminals 222 may be disposed in the end cap assembly 22. The two electrode terminals 222 are configured to be electrically connected to a positive tab and a negative tab of the electrode assembly 23 respectively. The two electrode terminals 222 in the end cap assembly 22 are a positive electrode terminal and a negative electrode terminal respectively. If there are two openings 211 of the shell 21, for example, if the two openings 211 are disposed on two opposite sides of the shell 21 respectively, the number of end cap assemblies 22 may also be two. The two end cap assemblies 22 fit and cover the two openings 211 of the shell 21 respectively. In this case, the electrode terminal 222 in one end cap assembly 22 may be a positive electrode terminal and configured to be electrically connected to the positive tab of the electrode assembly 23. The electrode terminal 222 in the other end cap assembly 22 may be a negative electrode terminal and configured to be electrically connected to the negative electrode plate of the electrode assembly 23.

In some embodiments, as shown in FIG. 4, the battery cell 20 may further include an insulation protector 25 fixed around the electrode assembly 23. The insulation protector 25 is configured to dielectrically isolate the electrode assembly 23 from the shell 21. As an example, the insulation protector 25 is adhesive tape bonded around the electrode assembly 23. In some embodiments, the number of electrode assemblies 23 is plural, and the insulation protector 25 is disposed around the plurality of electrode assemblies 23 to combine the plurality of electrode assemblies 23 into an integral structure to keep structural stability of the electrode assembly 23.

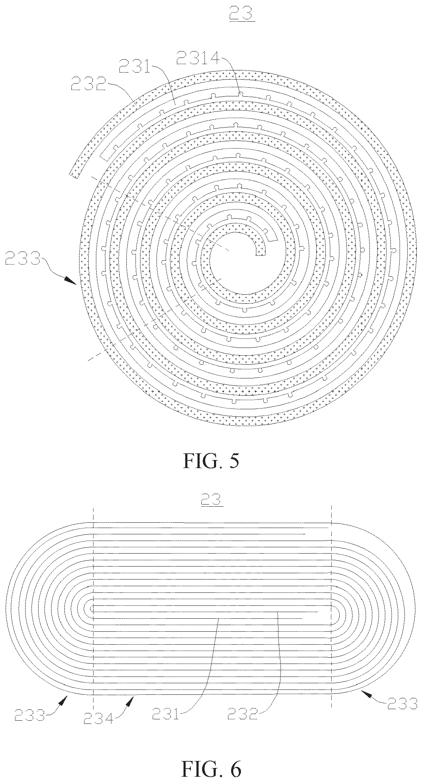

Referring to FIG. 5 and FIG. 6, FIG. 5 is a schematic structural diagram of an electrode assembly 23 according to some embodiments of this application; and FIG. 6 is a schematic structural diagram of an electrode assembly 23 according to some other embodiments of this application. The electrode assembly 23 may include a positive electrode plate 231, a negative electrode plate 232, and a separator (not shown in the drawing). The electrode assembly 23 is a jelly-roll structure formed by winding the positive electrode plate 231, the separator, and the negative electrode plate 232.

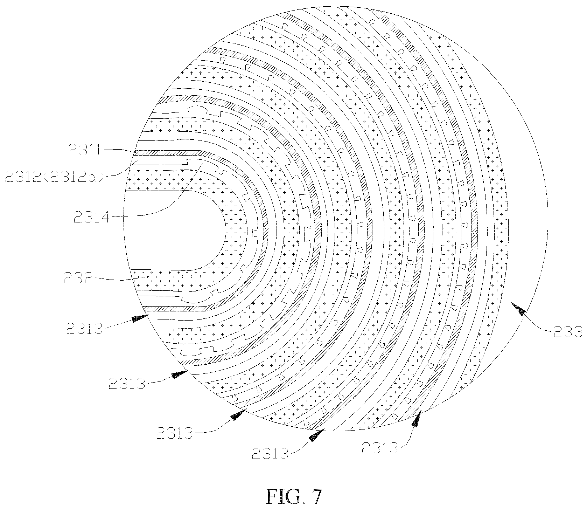

The positive electrode plate 231 includes a positive current collector 2311 (shown in FIG. 7) and a positive active material layer. A surface of the positive current collector 2311 is coated with the positive active material layer. Of the positive current collector 2311, a part uncoated with the positive active material layer protrudes from a part coated with the positive active material layer. The part, uncoated with the positive active material layer, of the positive current collector 2311, serves as a positive tab. The positive active material layer includes a first positive active material layer 2312 and a second positive active material layer. The first positive active material layer 2312 and the second positive active material layer are disposed on two surfaces of the positive current collector 2311 respectively along a thickness direction of the positive current collector 2311. Using a lithium-ion battery 100 as an example, the positive current collector 2311 may be made of aluminum, and a positive active material may be lithium cobalt oxide, lithium iron phosphate, ternary lithium, lithium manganese oxide, or the like.

The negative electrode plate 232 includes a negative current collector (not shown in the drawing) and a negative active material layer. A surface of the negative current collector is coated with the negative active material layer. Of the negative current collector, a part uncoated with the negative active material layer protrudes from a part coated with the negative active material layer, and the part uncoated with the negative active material layer serves as a negative tab. The negative active material layer includes a first negative active material layer and a second negative active material layer. The first negative active material layer and the second negative active material layer are disposed on two surfaces of the negative current collector respectively along a thickness direction of the negative current collector. The negative current collector may be made of copper, and a negative active material may be carbon, silicon, or the like. To prevent a large electrical current from tripping the circuit, a plurality of positive tabs are stacked together, and a plurality of negative tabs are stacked together.

The separator may be made of a material such as PP (polypropylene, polypropylene) or PE (polyethylene, polyethylene).

Still referring to FIG. 5 and FIG. 6, the jelly-roll electrode assembly 23 contains a bend region 233. The jelly-roll electrode assembly 23 includes a positive electrode plate 231. The positive electrode plate 231 includes a positive current collector 2311 and a first positive active material layer 2312 disposed on an inner surface of the positive current collector 2311. The inner surface is oriented toward a winding axis of the jelly-roll electrode assembly 23 after completion of winding. The positive electrode plate 231 includes a plurality of layers of bend portion 2313 located in the bend region 233 and arranged sequentially from inside to outside. The first positive active material layer 2312 includes a plurality of first positive active material portions 2312a located in the plurality of layers of bend portion 2313. A plurality of first grooves 2314 are created in at least one of the first positive active material portions 2312a.

After the positive electrode plate 231 is wound around the winding axis, one of the two surfaces of the positive current collector 2311 in the thickness direction of the positive current collector is closer to the winding axis and disposed toward the winding axis. This surface is an inner surface of the positive current collector 2311. The other surface is farther away from the winding axis and disposed back from the winding axis, and is an outer surface of the positive current collector 2311.

In some embodiments, as shown in FIG. 5, the jelly-roll electrode assembly 23 may be a cylindrical electrode assembly. In this case, any section of the electrode assembly along the circumferential direction of the jelly-roll electrode assembly 23 may be defined as a bend region 233, and a plurality of first grooves 2314 may be disposed in any bend region 233.

In some embodiments, the jelly-roll electrode assembly 23 may be prismatic. Referring to FIG. 6 and FIG. 7, FIG. 6 is a schematic structural diagram of an electrode assembly 23 according to some other embodiments of this application, and FIG. 7 is a schematic partial view of an electrode assembly 23 according to some embodiments of this application. The jelly-roll electrode assembly 23 includes a straight region 234 and two bend regions 233. The two bend regions 233 are connected to two ends of the straight region 234 respectively. After the positive electrode plate 231 is wound, a part of the positive electrode plate 231 is located in the straight region 234, and another part of the positive electrode plate 231 is located in the bend regions 233 and forms a plurality of layers of bend portion 2313 arranged sequentially from inside to outside. Each layer of bend portion 2313 includes a part of the first positive active material layer 2312. Therefore, the positive electrode plate 23 1 includes a plurality of first positive active material portions 2312a located in a plurality of layers of bend portion 2313. The plurality of first positive active material portions 2312a are arranged sequentially from inside to outside.

That a plurality of first grooves 2314 are created in at least one first positive active material portion 2312a may be: the first grooves 2314 are created in each first positive active material portion 2312a, or, the first grooves 2314 are created in some first positive active material portions 2312a among the plurality of first positive active material portion 2312a.

The first grooves 2314 may be formed by laser etching.

A plurality of first grooves 2314 are created on at least one layer of the first positive active material layer 2312 on the inner surface of the positive current collector 2311 in the bend region 233, thereby reducing the capacity of the positive active material in the bend region 233, and in turn, increasing the CB value of the bend region 233. The CB value is a ratio of the capacity of the negative active material to the capacity of the positive active material. The CB value may be greater than 1. Such arrangement can also reserve an expansion space for the jelly-roll electrode assembly 23, reduce the stress on the electrode plate (positive electrode plate 231 and/or negative electrode plate 232) in the bend region 233, and reduce the resistance in intercalating ions into the negative electrode plate 232 and/or the resistance in deintercalating ions from the positive electrode plate 231. The plurality of first grooves 2314 enable more electrolyte solution to be accommodated in the jelly-roll electrode assembly 23, and to serve as a supplementary electrolyte solution when the internal electrolyte solution is depleted due to expansion and squeezing of the jelly-roll electrode assembly 23. Such arrangement reduces the risk of lithium plating that occurs because the electrolyte infiltration is insufficient and affects transfer of ions, alleviates concentration polarization, improves the cycle performance in the battery cell 20, reduces the risk of lithium plating in the bend region 233, and in turn, improves the safety performance of the battery cell 20 containing the jelly-roll electrode assembly 23.

Still referring to FIG. 7, in some embodiments, the plurality of first grooves 2314 are spaced apart along an extension direction of the positive electrode plate 231.

When the positive electrode plate 231 is in the wound state, the extension direction of the positive electrode plate 231 is consistent with the winding direction. When the positive electrode plate 231 is in the unwound state, the extension direction of the positive electrode plate 231 is consistent with the length direction of the positive electrode plate 231.

In other embodiments, the plurality of first grooves 2314 may be arranged in the first positive active material portion 2312a in other ways. For example, the plurality of first grooves 2314 are arranged along the extension direction of the winding axis, or the plurality of first grooves 2314 are arranged annularly in the plurality of first grooves 2314.

The plurality of first grooves 2314 are spaced apart along the extension direction of the positive electrode plate 231 to reduce the risk of lithium plating at any position of the bend region 233 along the extension direction of the positive electrode plate 231.

Still referring to FIG. 7, in some embodiments, the plurality of first grooves 2314 are disposed on an inner surface of the first positive active material portion 2312a, the inner surface being away from the positive current collector 2311.

The inner surface of the first positive active material portion 2312a, which is away from the positive current collector 2311, is a surface of the first positive active material portion 2312a, the surface being farther away from the inner surface of the positive current collector 2311 along the thickness direction of the positive electrode plate 231. After the positive electrode plate 231 is wound, the surface of the first positive active material portion 2312a, which is farther away from the inner surface of the positive current collector 2311, is oriented toward the winding axis.

In other embodiments, the plurality of first grooves 2314 may be disposed at two opposite ends of the first positive active material portion 2312a along the winding axis instead.

The plurality of first grooves 2314 are disposed on the inner surface of the first positive active material portion 2312a away from the positive current collector 2311, thereby reducing the capacity of the positive active material in the bend region 233, and in turn, increasing the CB value of the bend region 233, reducing the lithium plating risk of the jelly-roll electrode assembly 23, and improving the safety performance of the battery cell 20 containing the jelly-roll electrode assembly 23. The first grooves 2314 created on the inner surface of the first positive active material portion 2312a can also reserve an expansion space for the jelly-roll electrode assembly 23, reduce the stress on the electrode plate (positive electrode plate 231 and/or negative electrode plate 232) in the bend region 233, and reduce the resistance in intercalating ions into the negative electrode plate 232 and/or the resistance in deintercalating ions from the positive electrode plate 231. Disposing the first grooves 2314 on the inner surface of the first positive active material portion 2312a away from the positive current collector 2311 can also increase the space between the first positive active material portion 2312a and the negative electrode plate 232 on the inner side of the first positive active material portion, enable more electrolyte solution to be accommodated, enable the electrode assembly 23 to be infiltrated sufficiently, further reduce the risk of lithium plating that occurs because the electrolyte solution is extruded out of the jelly-roll electrode assembly 23 and affects transfer of ions, improve the cycle performance in the battery cell 20, reduce the risk of lithium plating in the bend region 233, and in turn, improve the safety performance of the battery cell 20 containing the jelly-roll electrode assembly 23.

Referring to FIG. 7, in some embodiments, the first grooves 2314 run through the first positive active material portion 2312a until both ends in an extension direction of the winding axis.

In an embodiment in which the first grooves 2314 are disposed on the inner surface of the first positive active material portion 2312a, the inner surface being away from the positive current collector 2311, the first grooves 2314 are recessed from one inner surface to another inner surface of the first positive active material portion 2312a, where the one inner surface is away from the positive current collector 2311 and the other inner surface is close to the positive electrode plate 231. In addition, the first grooves extend along the winding axis and run through the first positive active material portion 2312a until both ends. When the first grooves 2314 are recessed from one inner surface to another inner surface of the first positive active material portion 2312a, with the one surface being away from the positive current collector 2311 and the other inner surface being close to the positive electrode plate 231, the recess depth is less than the thickness of the first positive active material portion 2312a, so that a distance between a bottom wall of the first groove 2314 and the inner surface of the positive current collector 2311 is greater than zero.

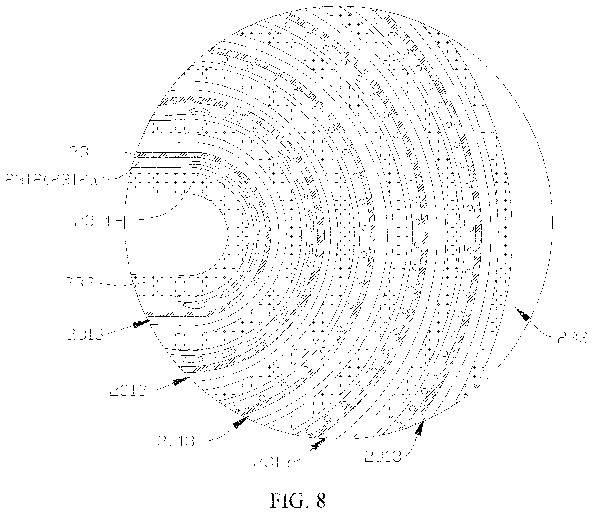

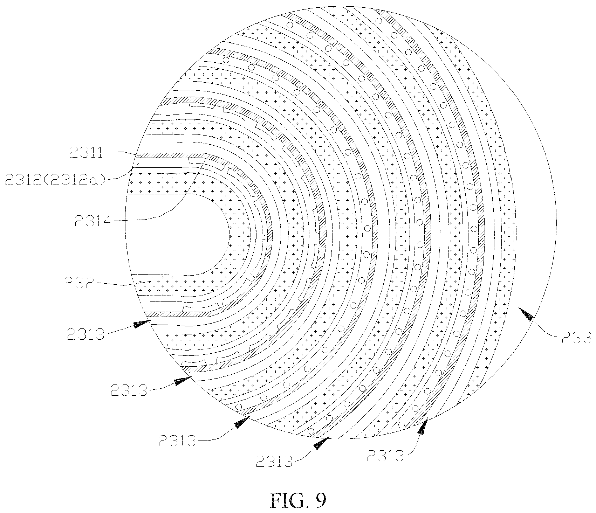

Referring to FIG. 8, in an embodiment in which the first grooves 2314 are disposed at both ends of the first positive active material portion 2312a in the extension direction of the winding axis, the first grooves 2314 are channels formed in the first positive active material portion 2312a. The first grooves 2314 in the form of channels may be defined by the first positive active material portion 2312a, or, as shown in FIG. 9, may be defined jointly by the first positive active material portion 2312a and the inner surface of the positive current collector 2311.

In other embodiments, the first grooves 2314 does not necessarily run through the first positive active material portion 2312a until both ends along the winding axis. For example, the first grooves 2314 are dents created on the inner surface of the first positive active material portion 2312a and/or at both ends of the first positive active material portion 2312a along the extension direction of the winding axis.

Along the extension direction of the winding axis, the first grooves 2314 run through the first positive active material portion 2312a until both ends to provide channels for the electrolyte solution to infiltrate the jelly-roll electrode assembly 23, thereby facilitating the flow of the electrolyte solution inside the jelly-roll electrode assembly 23, reducing the risk of insufficient infiltration in the bend region 233 of the jelly-roll electrode assembly 23 caused by a high stress, reducing the concentration polarization, and alleviating lithium plating in the bend region 233.

In some embodiments, the extension direction of the first grooves 2314 is parallel to the extension direction of the winding axis.

In other embodiments, the first grooves 2314 may be arranged in other forms. For example, the first grooves 2314 are arranged at an angle to the extension direction of the winding axis, or the first grooves 2314 are wavy.

The extension direction of the first grooves 2314 is parallel to the extension direction of the winding axis, thereby making it convenient to form the first grooves 2314 in the first positive active material portion 2312a, and reducing the production difficulty.

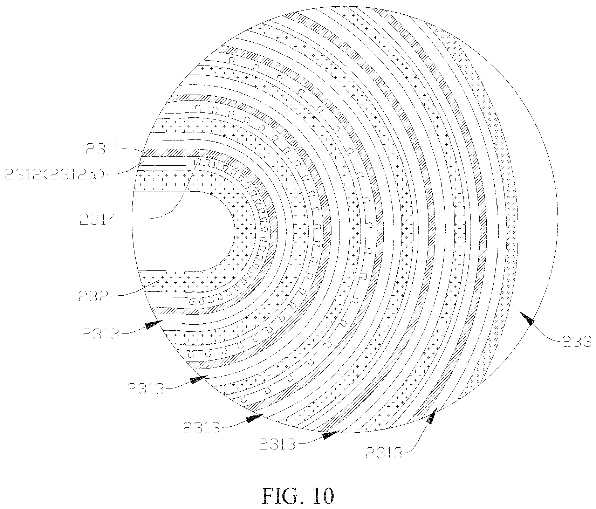

In a jelly-roll electrode assembly 23, the coil or layer closer to the winding axis is more prone to lithium plating. When the electrode assembly 23 expands, the coil or layer closer to the winding axis is squeezed more intensely. Therefore, as shown in FIG. 10, in some embodiments, a plurality of first grooves 2314 are created in at least two of the first positive active material portions 2312a in the bend region 233. Among the two first positive active material portions 2312a, a distribution density of the first grooves 2314 in the first positive active material portion 2312a located inside is greater than a distribution density of the first grooves 2314 in the first positive active material portion 2312a located outside.

The distribution density of the first grooves 2314 may be defined as the number of first grooves 2314 per unit area of the first positive active material portion 2312a.

"The first positive active material portion 2312a located inside" means the first positive active material portion 2312a closer to the winding axis among the two first positive active material portions 2312a. "The first positive active material portion 2312a located outside" means the first positive active material portion 2312a farther away from the winding axis among the two first positive active material portions 2312a.

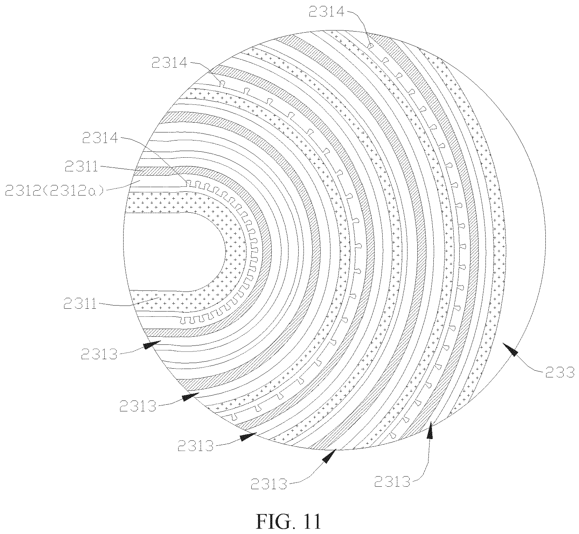

The at least two first positive active material portions 2312a, in which the first grooves 2314 are created, may be first positive active material portions 2312a sequentially adjacent to each other from inside to outside, or, as shown in FIG. 11, may be at least two first positive active material portions 2312a interspaced. In other words, at least one first positive active material portion 2312a without the first grooves 2314 may exist between the two first positive active material portions 2312a with the first grooves 2314. The distribution density of the first grooves 2314 is compared between the two first positive active material portions 2312a with the first grooves 2314.

The distribution density of the first grooves 2314 in the first positive active material portion 2312a located inside is greater than the distribution density of the first grooves 2314 in the first positive active material portion 2312a located outside. In this way, a larger space is provided between the first positive active material portion 2312a located inside and the negative electrode plate 232 located inside, and a larger expansion space can be reserved for the jelly-roll electrode assembly 23, thereby reducing the stress on the electrode plate (positive electrode plate 231 and/or negative electrode plate 232) in the bend region 233, and reducing the resistance in intercalating ions into the negative electrode plate 232 and/or deintercalating ions from the positive electrode plate 231. Such arrangement enables more electrolyte solution to be accommodated, reduces the risk of lithium plating that occurs because the electrolyte solution close to the winding axis is extruded and affects transfer of ions, and improves the cycle performance in the battery cell 20.

Referring to FIG. 7 and FIG. 8, in some embodiments, a plurality of first grooves 2314 are created in at least two of the first positive active material portions 2312a in the bend region 233. Among the two first positive active material portions 2312a, a width of the first grooves 2314 in the first positive active material portion 2312a located inside is greater than a width of the first grooves 2314 in the first positive active material portion 2312a located outside.

In some other embodiments, a plurality of first grooves 2314 are created in at least two first positive active material portions 2312a in the bend region 233. Among the two first positive active material portions 2312a, the width of the first grooves 2314 in the first positive active material portion 2312a located inside is greater than the width of the first grooves 2314 in the first positive active material portion 2312a located outside, and the distribution density of the first grooves 2314 in the first positive active material portion 2312a located inside is greater than the distribution density of the first grooves 2314 in the first positive active material portion 2312a located outside.

In some other embodiments, the width of the first grooves 2314 in each first positive active material portion 2312a may be identical.

The width of the first grooves 2314 in the first positive active material portion 2312a located inside is greater than the width of the first grooves 2314 in the first positive active material portion 2312a located outside. In this way, a larger space is provided between the first positive active material portion 2312a located inside and the negative electrode plate 232 located inside, and a larger expansion space can be reserved for the jelly-roll electrode assembly 23, thereby reducing the stress on the electrode plate (positive electrode plate 231 and/or negative electrode plate 232) in the bend region 233, and reducing the resistance in intercalating ions into the negative electrode plate 232 and/or deintercalating ions from the positive electrode plate 231. Such arrangement enables more electrolyte solution to be accommodated, reduces the risk of lithium plating that occurs because the electrolyte solution close to the winding axis is extruded and affects transfer of ions, and improves the cycle performance in the battery cell 20.

In the jelly-roll electrode assembly 23, when the electrode assembly 23 expands, the innermost layer of bend portion 2313 is squeezed first and squeezed more intensely. Therefore, as shown in FIG. 11, in some embodiments, a plurality of first grooves 2314 are created in at least one innermost first positive active material portion in the bend region 233.

The innermost first positive active material portion 2312a means the first positive active material portion 2312a closest to the winding axis in the same bend region 233. In a case that a plurality of first grooves 2314 are created in the innermost first positive active material portion 2312a, the first grooves 2314 may be created, or not created, in other first positive active material layers 2312.

By creating a plurality of first grooves 2314 in the innermost first positive active material portion, more electrolyte solution can be accommodated between the innermost first positive active material portion and the negative electrode plate 232 located inside. Such electrolyte solution can serve as a supplementary electrolyte solution when the internal electrolyte solution is depleted due to expansion and squeezing of the innermost first positive active material portion. Such arrangement reduces the risk of lithium plating that occurs because the internal electrolyte solution of the jelly-roll electrode assembly 23 is extruded and affects transfer of ions, and improves the cycle performance in the battery cell 20.

When the jelly-roll electrode assembly 23 expands severely, the outer periphery of the jelly-roll electrode assembly 23 abuts against the inner wall of the shell 21, thereby causing the jelly-roll electrode assembly 23 and the shell 21 (shown in FIG. 3 and FIG. 4) to squeeze each other, and the electrolyte solution in a part of the jelly-roll electrode assembly 23 that is close to the shell 21 is extruded severely, thereby resulting in insufficient infiltration for the electrode plate at the part close to the shell 21.

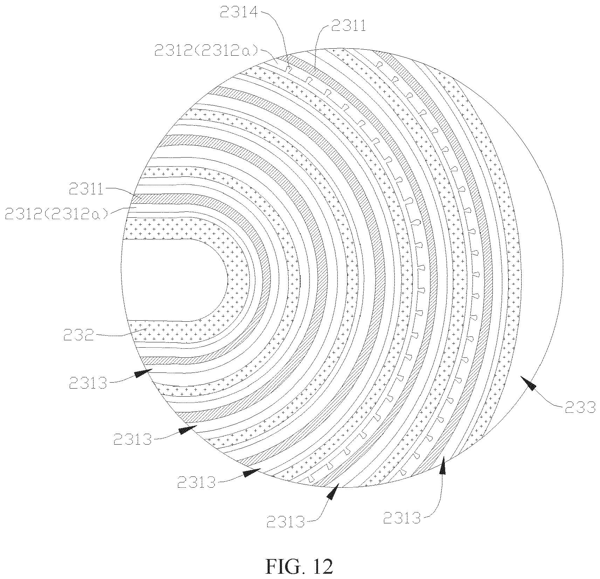

As shown in FIG. 12, in some embodiments, the positive electrode plate 231 includes a winding termination section. A plurality of first grooves 2314 are created in at least a part of the first positive active material portions 2312a in the winding termination section in the bend region 233.

The winding termination section is a section defined by extending the electrode plate for a distance from a winding termination end along a direction opposite to the winding direction. The winding termination section may be a section formed by extending the electrode plate for a length of one or more coils from the winding termination end along the direction opposite to the winding direction. The winding termination section passes through the bend region 233 at least once from the winding termination end along the direction opposite to the winding direction.

When the jelly-roll electrode assembly 23 expands until abutting against the shell 21 of the battery cell 20, the electrode plate closer to the inner wall of the shell 21 is subjected to a larger extrusion force. A plurality of first grooves 2314 are created in at least a part of the first positive active material portions 2312a in the winding termination section, thereby reserving an expansion space in a region close to the inner wall of the shell 21 in the jelly-roll electrode assembly 23, reducing the stress on the electrode plate (positive electrode plate 231 and/or negative electrode plate 232) close to the inner wall of the shell 21 in the bend region 233, and reducing the resistance in intercalating ions into the negative electrode plate 232. The plurality of first grooves also enable more electrolyte solution to be accommodated in the jelly-roll electrode assembly 23, and to serve as a supplementary electrolyte solution in a case that the internal electrolyte solution is extruded when the jelly-roll electrode assembly 23 expands until abutting against the inner wall of the shell 21. Such arrangement reduces the risk of lithium plating that occurs because the internal electrolyte solution is extruded out of the jelly-roll electrode assembly 23 and affects transfer of ions, improves the cycle performance in the battery cell 20, reduces the risk of lithium plating in the bend region 233, and in turn, improves the safety performance of the battery cell 20 containing the jelly-roll electrode assembly 23.

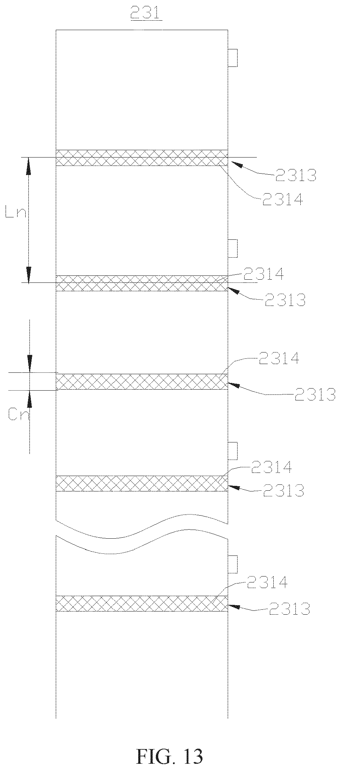

As shown in FIG. 13, in some embodiments, the plurality of first grooves 2314 are arranged in a lattice pattern.

"The plurality of first grooves 2314 are arranged in a lattice pattern" means that at least two of the first grooves 2314 in a bend portion 2313 cross over each other and communicate with each other. For example, every two of a plurality of first grooves 2314 communicate with each other. In other words, the plurality of first grooves 2314 communicate with each other.

The plurality of first grooves 2314 are arranged in a lattice pattern, thereby guiding the electrolyte solution to flow in different directions, facilitating circulation of the electrolyte solution inside the jelly-roll electrode assembly 23, alleviating the insufficiency of infiltration at the bend region 233 of the jelly-roll electrode assembly 23 caused by a high stress, reducing the concentration polarization, and alleviating the lithium plating at the corners.

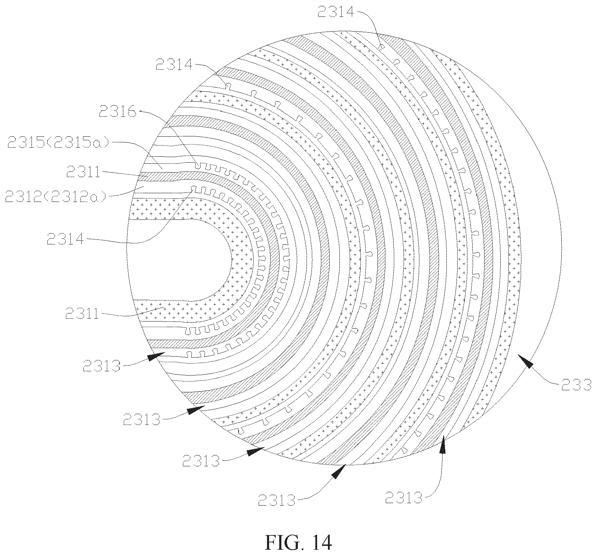

As shown in FIG. 14, in some embodiments, the positive electrode plate 231 further includes a second positive active material layer 2315 disposed on an outer surface of the positive current collector 2311. The second positive active material layer includes a plurality of second positive active material portions 2315a located in a plurality of layers of bend portion 2313. A plurality of second grooves 2316 are created in at least one of the second positive active material portions 2315a.

For the relevant description of the second grooves, reference may be made to the description of the first grooves 2314, and details are omitted herein.

In some other embodiments, just the first grooves 2314 are created in the first active material portion 2312a, without creating the second grooves 2316 in the second active material portion 2315.

A plurality of second grooves 2316 are created on at least one layer of the second positive active material layer 2315 on the outer surface of the positive current collector 2311 in the bend region 233, thereby reserving an expansion space for the jelly-roll electrode assembly 23, reducing the stress on the electrode plate (positive electrode plate 231 and/or negative electrode plate 232) in the bend region 233, and reducing the resistance in intercalating ions into the negative electrode plate 232. The plurality of second grooves 2316 enable more electrolyte solution to be accommodated in the jelly-roll electrode assembly 23, and to serve as a supplementary electrolyte solution when the internal electrolyte solution is depleted due to expansion and squeezing of the jelly-roll electrode assembly 23. Such arrangement reduces the risk of lithium plating that occurs because the internal electrolyte solution of the jelly-roll electrode assembly 23 is extruded and affects transfer of ions, improves the cycle performance in the battery cell 20, reduces the risk of lithium plating in the bend region 233, and in turn, improves the safety performance of the battery cell 20 containing the jelly-roll electrode assembly 23.

In some embodiments, the jelly-roll electrode assembly 23 includes a straight region 234 and two bend regions 233. The two bend regions 233 are connected to two ends of the straight region 234 respectively. A weight W₀ of the positive active material layer per unit area of the positive electrode plate 231 located in the straight region 234 and a weight Wₙ of the positive active material per unit area of the positive electrode plate 231 located in the bend regions 233 satisfy: 30%W₀ ≤ Wₙ ≤ 95%W₀.

The weight W₀ of the positive active material layer per unit area of the positive electrode plate 231 in the straight region 234 is an average weight of the positive active material layer per unit area of the positive electrode plate 231 in the straight region 234. The weight Wₙ of the positive active material per unit area of the positive electrode plate 231 in the bend region 233 is an average weight of the positive active material per unit area of the positive electrode plate 231 in the bend region 233.

W₀ and Wₙ satisfy 30%W₀ ≤ Wₙ ≤ 95%W₀, thereby not only reducing the risk of lithium plating in the bend region 233 of the jelly-roll electrode assembly 23, but also ensuring a high energy density of the jelly-roll electrode assembly 23.

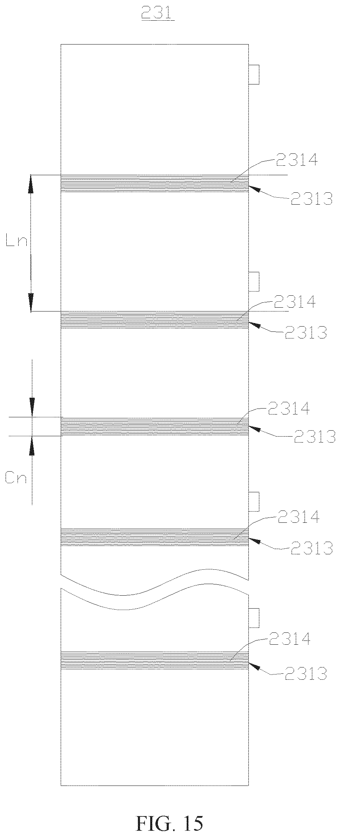

As shown in FIG. 15, in some embodiments, the jelly-roll electrode assembly 23 further includes a negative electrode plate 232 and a separator. A thickness of the positive electrode plate 231 is M₁. A thickness of the negative electrode plate 232 is M₂. A thickness of the separator is M₃. A distance between an initial first groove 2314 and a last first groove 2314 in an n^{th} layer of bend portion 2313 from inside to outside along a winding direction of the jelly-roll electrode assembly 23 is Cₙ, satisfying: 0.1 mm ≤ Cₙ ≤ pi × (M₁ + M₂ + M₃) × a + 50 mm, where n is a natural number greater than or equal to 2, a denotes an a^{th} layer of positive electrode plate 231 from outside to inside, and pi is a circumference ratio.

With the gradual increase of the winding radius, the length of the bend portion 2313 along the winding direction gradually increases from inside to outside. Therefore, a plurality of first grooves 2314 in the bend portion 2313 need to span a large range, so that the plurality of first grooves 2314 cover the corresponding bend portion 2313 over the largest possible range along the winding direction. For example, the initial first groove 2314 and the last first groove 2314 in the first layer of bend portion 2313 from inside to outside satisfy: 0.1 mm ≤ C₁ ≤ pi × (M₁ + M₂ + M₃) × 1 + 50 mm. The initial first groove 2314 and the last first groove 2314 in the second layer of bend portion 2313 from inside to outside satisfy: 0.1 mm ≤ C₂ ≤ pi × (M₁ + M₂ + M₃) × 2 + 50 mm, and so on.

The thickness of the positive electrode plate 231 is M₁, the thickness of the negative electrode plate 232 is M₂, and the thickness of the separator is M₃. The distance between the initial first groove 2314 and the last first groove 2314 in the n^{th} layer of bend portion 2313 from inside to outside along the winding direction of the jelly-roll electrode assembly 23 is Cₙ, satisfying: 0.1 mm ≤ Cₙ ≤ pi × (M₁ + M₂ + 2M₃) × a + 50 mm. In this way, on the layer of bend portion 2313 farther away from the winding axis, the span of the plurality of first grooves 2314 along the winding direction is larger, so that the span of the plurality of first grooves 2314 on each layer of bend portion 2313 matches the length of the corresponding bend portion 2313, thereby effectively alleviating the problem of lithium plating caused by attenuation of active lithium at the bend portion 2313.

In some embodiments, along the winding direction, a distance Lₙ between the initial first groove 2314 in one bend portion 2313 among two adjacent bend portions 2313 and the last first groove 2314 in the other bend portion 2313 among the two adjacent bend portions 2313 is greater than or equal to 0 and less than a total length of the positive electrode plate 231.

An embodiment of this application provides a prismatic jelly-roll electrode assembly 23. The jelly-roll electrode assembly 23 includes a positive electrode plate 231. The positive electrode plate 231 includes a positive current collector 2311, a first positive active material layer 2312 disposed on an inner surface of the positive current collector 2311, and a second positive active material layer 2315 disposed on an outer surface of the positive current collector 2311. The positive electrode plate 231 includes a plurality of layers of bend portion 2313 located in the bend region 233 and arranged sequentially from inside to outside. The first positive active material layer 2312 includes a plurality of first positive active material portions 2312a located in a plurality of layers of bend portion 2313. A plurality of first grooves 2314 are created in at least one of the first positive active material portions 2312a. The plurality of first grooves 2314 are spaced apart along the extension direction of the positive electrode plate 231. The first grooves 2314 are arranged on the inner surface of the first positive active material portion 2312a, the inner surface being away from the positive current collector 2311. The first grooves 2314 run through the first positive active material portion 2312a until both ends along the winding axis direction. The extension direction of the first grooves 2314 is parallel to the winding axis direction.

A plurality of first grooves 2314 are created in at least two first positive active material portions 2312a in the bend region 233. Among the two first positive active material portions 2312a in which the first grooves 2314 are created, the distribution density of the first grooves 2314 in the first positive active material portion 2312a located inside is greater than the distribution density of the first grooves 2314 in the first positive active material portion 2312a located outside, and the width of the first grooves 2314 in the first positive active material portion 2312a located inside is greater than the width of the first grooves 2314 in the first positive active material portion 2312a located outside.

Some embodiments of this application further provide a battery cell 20. The battery cell 20 includes a shell 21 and the jelly-roll electrode assembly 23 disclosed in any one of the foregoing embodiments. The shell 21 includes an opening 211. The jelly-roll electrode assembly 23 is accommodated in the shell 21.

The battery cell 20 includes the jelly-roll electrode assembly 23 disclosed in any one of the foregoing embodiments, thereby improving the cycle performance of the battery cell 20, reducing the risk of lithium plating of the battery cell 20, and in turn, improving the safety performance of the battery cell 20.

An embodiment of this application further provides a battery 100. The battery 100 includes the battery cell 20 disclosed in the foregoing embodiment, thereby improving the cycle performance of the battery 100, reducing the risk of lithium plating of the battery 100, and in turn, improving the safety performance of the battery 100.

An embodiment of this application further provides an electrical device. The electrical device includes the battery cell 20 disclosed in the foregoing embodiment.

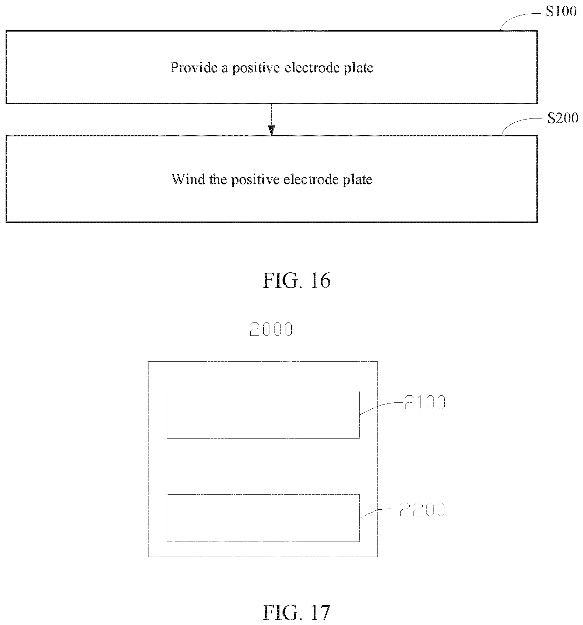

Referring to FIG. 16, an embodiment of this application further provides a method for manufacturing a jelly-roll electrode assembly 23. The manufacturing method includes:
Step S100: Providing a positive electrode plate 231, where the positive electrode plate 231 includes a positive current collector 2311 and a first positive active material layer 2312 disposed on one side of the positive current collector 2311, and a plurality of first grooves 2314 are created on the first positive active material layer 2312; and
Step S200: Winding the positive electrode plate 231 to form a jelly-roll electrode assembly 23.

The first positive active material layer 2312 is located on an inner surface of the positive current collector 2311. The inner surface is oriented toward a winding axis of the jelly-roll electrode assembly 23 after completion of winding. The jelly-roll electrode assembly 23 includes a bend region 233. The positive electrode plate 231 includes a plurality of layers of bend portion 2313 located in the bend region 233 and arranged sequentially from inside to outside. At least a part of the first grooves 2314 among the plurality of first grooves 2314 are located in at least one layer of bend portion 2313.

Referring to FIG. 17, an embodiment of this application further provides a piece of equipment 2000 for manufacturing a jelly-roll electrode assembly. The manufacturing equipment includes a providing apparatus 2100 and an assembling apparatus 2200. The providing apparatus 2100 is configured to provide a positive electrode plate 231. The positive electrode plate 231 includes a positive current collector 2311 and a first positive active material layer 2312 disposed on one side of the positive current collector 2311. A plurality of first grooves 2314 are created on the first positive active material layer 2312. The assembling apparatus 2200 is configured to wind the positive electrode plate 231 to form a jelly-roll electrode assembly 23. The first positive active material layer 2312 is located on an inner surface of the positive current collector 2311. The inner surface is oriented toward a winding axis of the jelly-roll electrode assembly 23 after completion of winding. The jelly-roll electrode assembly 23 includes a bend region 233. The positive electrode plate 231 includes a plurality of layers of bend portion 2313 located in the bend region 233 and arranged sequentially from inside to outside. At least a part of the plurality of first grooves 2314 are located in at least one layer of bend portion 2313.

What is described above is merely exemplary embodiments of this application, but is not intended to limit this application. To a person skilled in the art, various modifications and variations may be made to this application. Any and all modifications, equivalent replacements, improvements, and the like made without departing from the spirit and principles of this application still fall within the protection scope of this application.

## Claims

1. A jelly-roll electrode assembly, wherein the jelly-roll electrode assembly contains a bend region and comprises:
a positive electrode plate, comprising a positive current collector and a first positive active material layer disposed on an inner surface of the positive current collector, the inner surface is oriented toward a winding axis of the jelly-roll electrode assembly after completion of winding, the positive electrode plate comprises a plurality of layers of bend portion located in the bend region and arranged sequentially from inside to outside, the first positive active material layer comprises a plurality of first positive active material portions located in the plurality of layers of bend portion, and a plurality of first grooves are created in at least one of the first positive active material portions.

2. The jelly-roll electrode assembly according to claim 1, wherein the plurality of first grooves are spaced apart along an extension direction of the positive electrode plate.

3. The jelly-roll electrode assembly according to claim 1 or 2, wherein the plurality of first grooves are disposed on an inner surface of the first positive active material portion, the inner surface being away from the positive current collector.

4. The jelly-roll electrode assembly according to any one of claims 1 to 3, wherein the first grooves run through the first positive active material portion until both ends in an extension direction of the winding axis.

5. The jelly-roll electrode assembly according to claim 4, wherein an extension direction of the first grooves is parallel to the extension direction of the winding axis.

6. The jelly-roll electrode assembly according to any one of claims 1 to 5, wherein a plurality of first grooves are created in at least two of the first positive active material portions in the bend region; and
among the two first positive active material portions, a distribution density of the first grooves in the first positive active material portion located inside is greater than a distribution density of the first grooves in the first positive active material portion located outside.

7. The jelly-roll electrode assembly according to any one of claims 1 to 6, wherein a plurality of first grooves are created in at least two of the first positive active material portions in the bend region; and
among the two first positive active material portions, a width of the first grooves in the first positive active material portion located inside is greater than a width of the first grooves in the first positive active material portion located outside.

8. The jelly-roll electrode assembly according to any one of claims 1 to 7, wherein a plurality of first grooves are created in at least one innermost first positive active material portion in the bend region.

9. The jelly-roll electrode assembly according to any one of claims 1 to 8, wherein the positive electrode plate comprises a winding termination section, and a plurality of first grooves are created in at least a part of the first positive active material portions in the winding termination section in the bend region.

10. The j elly-roll electrode assembly according to any one of claims 1 to 9, wherein the plurality of first grooves are arranged in a lattice pattern.

11. The jelly-roll electrode assembly according to any one of claims 1 to 10, wherein the positive electrode plate further comprises a second positive active material layer disposed on an outer surface of the positive current collector, and the second positive active material layer comprises a plurality of second positive active material portions located in the plurality of layers of bend portion; and
a plurality of second grooves are created in at least one of the second positive active material portions.

12. The jelly-roll electrode assembly according to any one of claims 1 to 11, wherein the jelly-roll electrode assembly comprises a straight region and two bend regions, and the two bend regions are connected to two ends of the straight region respectively; and
a weight W₀ of the positive active material layer per unit area of the positive electrode plate located in the straight region and a weight Wₙ of the positive active material per unit area of the positive electrode plate located in the bend regions satisfy: 30%W₀ ≤ Wₙ ≤ 95%W₀.

13. The jelly-roll electrode assembly according to any one of claims 1 to 12, wherein the jelly-roll electrode assembly further comprises a negative electrode plate and a separator, a thickness of the positive electrode plate is M₁, a thickness of the negative electrode plate is M₂, a thickness of the separator is M₃, and a distance between an initial first groove and a last first groove in an n^{th} layer of bend portion from inside to outside along a winding direction of the jelly-roll electrode assembly is Cₙ, satisfying: 0.1 mm ≤ Cₙ ≤ pi × (M₁ + M₂ + 2M₃) × a + 50 mm, wherein n is a natural number greater than or equal to 2, a denotes an a^{th} layer of positive electrode plate from inside to outside, and pi is a circumference ratio.

14. A battery cell, comprising:
a shell, on which an opening is created;
the jelly-roll electrode assembly according to any one of claims 1 to 13, accommodated in the shell.

15. A battery, comprising the battery cell according to claim 14.

16. An electrical device, comprising the battery cell according to claim 14.

17. A method for manufacturing a jelly-roll electrode assembly, comprising:
providing a positive electrode plate, wherein the positive electrode plate comprises a positive current collector and a first positive active material layer disposed on one side of the positive current collector, and a plurality of first grooves are created on the first positive active material layer; and
winding the positive electrode plate to form a jelly-roll electrode assembly, wherein
the first positive active material layer is located on an inner surface of the positive current collector, the inner surface is oriented toward a winding axis of the jelly-roll electrode assembly after completion of winding, the jelly-roll electrode assembly comprises a bend region, the positive electrode plate comprises a plurality of layers of bend portion located in the bend region and arranged sequentially from inside to outside, and at least a part of the plurality of first grooves are located in at least one layer of bend portion.

18. A piece of equipment for manufacturing a jelly-roll electrode assembly, comprising:
a providing apparatus, configured to provide a positive electrode plate,
wherein the positive electrode plate comprises a positive current collector and a first positive active material layer disposed on one side of the positive current collector, and a plurality of first grooves are created on the first positive active material layer; and
an assembling apparatus, configured to wind the positive electrode plate to form a jelly-roll electrode assembly, wherein
the first positive active material layer is located on an inner surface of the positive current collector, the inner surface is oriented toward a winding axis of the jelly-roll electrode assembly after completion of winding, the jelly-roll electrode assembly comprises a bend region, the positive electrode plate comprises a plurality of layers of bend portion located in the bend region and arranged sequentially from inside to outside, and at least a part of the plurality of first grooves are located in at least one layer of bend portion.
